(19)

Europäisches
Patentamt
European
Patent Office
Office européen
des brevets

(11) **EP 2 574 763 A1**

(12) **EUROPEAN PATENT APPLICATION**

(43) Date of publication:
**03.04.2013 Bulletin 2013/14**

(51) Int Cl.:
**F02D 41/14** *(2006.01)*    *F02D 41/02* *(2006.01)*
**F02D 35/02** *(2006.01)*

(21) Application number: **11183562.5**

(22) Date of filing: **30.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Volvo Car Corporation**
**405 31 Göteborg (SE)**

(72) Inventors:
• **Vartia, Christian**
  **SE-431 37 MÖLNDAL (SE)**
• **Johansson, Krister**
  **SE-519 39 HORRED (SE)**

(74) Representative: **Ekwall, Peter**
**Zacco Sweden AB**
**P.O. Box 5581**
**114 85 Stockholm (SE)**

(54) **NOx emission estimation method and arrangement**

(57)    A NO$_x$ emission estimation method and arrangement for a diesel engine for estimating the amount of NO$_x$ generated in a combustion chamber of the diesel engine. The method comprises the steps of: providing values for speed and load by measuring the engine speed and the fuel injection amount; providing a base NO$_x$ value from an engine speed-load resolved reference NO$_x$ map; defining and providing emission influencing input parameters by measuring corresponding signal values; calculating a deviation between at least one emission influencing input parameter and a speed-load resolved reference value for the at least one emission influencing input parameter; multiplying the calculated deviation with an individual value from an individual speed-load resolved weight map for the at least one emission influencing input parameter, thereby creating an emission influencing input parameter related correction for the at least one emission influencing input parameter; adding and summarizing the at least one emission influencing input parameter related correction to the base NO$_x$ value and thereby obtaining an estimated NO$_x$ mass flow value.

```
                    ┌─────────┐
                    │  Start  │
                    └─────────┘
                         │
  ┌──────────────────────────────────────────────┐
  │ Providing values for speed and load by measuring │──── 10
  │ the engine speed and the fuel injection amount  │
  └──────────────────────────────────────────────┘
                         │
  ┌──────────────────────────────────────────────┐
  │ Providing a base NO_x value from an engine       │──── 11
  │ speed-load resolved reference NO_x map           │
  └──────────────────────────────────────────────┘
                         │
  ┌──────────────────────────────────────────────┐
  │ Defining and providing emission influencing input parameters │──── 12
  │ by measuring corresponding signal values        │
  └──────────────────────────────────────────────┘
                         │
  ┌──────────────────────────────────────────────┐
  │ Calculating a deviation between at least one emission influencing │──── 13
  │ input parameter and a speed-load resolved reference value for │
  │ the at least one emission influencing input parameter │
  └──────────────────────────────────────────────┘
                         │
  ┌──────────────────────────────────────────────┐
  │ Multiplying the calculated deviation with an individual value from │──── 14
  │ an individual speed-load resolved weight map for the at least │
  │ one emission influencing input parameter, thereby creating an │
  │ emission influencing input parameter related correction │
  │ for the at least one emission influencing input parameter │
  └──────────────────────────────────────────────┘
                         │
  ┌──────────────────────────────────────────────┐
  │ Adding and summarizing the at least one emission influencing │──── 15
  │ input parameter related correction to the base NO_x value and │
  │ thereby obtaining an estimated NO_x mass flow value │
  └──────────────────────────────────────────────┘
```

**FIG. 1**

EP 2 574 763 A1

**Description**

TECHNICAL FIELD

The present invention relates to the field of $NO_x$ emission estimation and more particularly, to a $NO_x$ emission estimation method and arrangement for engines in vehicles.

BACKGROUND

Modern diesel engines generate $NO_x$ from the engine combustion that need to be taken care of using an after treatment system and as a part of this control strategy there is a need to estimate how much $NO_x$ that is generated in the diesel engine combustion. Diesel engine $NO_x$ emission estimation is a challenging technical field both due to difficulties in measuring $NO_x$ emissions and difficulties to reproduce results. Further, it is also a technical filed where a relatively large calibration effort is needed during late stages of the development of the diesel engines.

Today, there exist various examples of estimating $NO_x$ out of the diesel engine. However, these examples do not estimate the $NO_x$ out of the diesel engine using the root causing physical parameters. Further, these known examples lack robustness towards internal and external processes that directly or indirectly influence these physical parameters. Thereby, these examples provide a relatively low accuracy.

There is thus a need for an improved $NO_x$ emission estimation method and arrangement removing the above mentioned disadvantages.

DESCRIPTION OF INVENTION

The present invention relates to the field of $NO_x$ emission estimation for diesel engines in vehicles. The present invention estimates the $NO_x$ emissions out of the diesel engine, whereby after treatment systems, such as for example diesel particulate filter (DPF), lean $NO_x$ trap (LNT) or selective catalytic reduction (SCR), can be further modeled and controlled.

The object of the present invention is to suggest an improved and easy to implement method and arrangement which improves the accuracy of the $NO_x$ estimation and thereby enabling an improved and optimized control of the after treatment systems.

The present invention is defined by the appended independent claims. Various examples of the invention are set forth by the appended dependent claims as well as by the following description and the accompanying drawings.

With the above description in mind, then, an aspect of the present invention is to provide an improved solution of estimating the $NO_x$ emission out of the diesel engine and thereby optimizing a control strategy of the after treatments systems which seeks to mitigate, alleviate, or eliminate one or more of the above-identified deficiencies in the art and disadvantages singly or in any combination.

The present invention is based on physical parameters contributing to the $NO_x$ formation process during combustion. As a consequence, the present invention is robust towards internal and external processes that directly or indirectly influence these physical parameters. A practical consequence of the present invention is that the calibration effort reduces significantly. The present invention captures the real $NO_x$ formation dependencies, thus being both more accurate and more robust, enabling a more accurate and robust control of the after treatment systems.

The object is achieved by the features of claim 1 wherein, a $NO_x$ emission estimation method for a diesel engine for estimating the amount of $NO_x$ generated in a combustion chamber of the diesel engine, characterized in that the method comprises the steps of: providing values for speed and load by measuring the engine speed and the fuel injection amount; providing a base $NO_x$ value from an engine speed-load resolved reference $NO_x$ map; defining and providing emission influencing input parameters by measuring corresponding signal values; calculating a deviation between at least one emission influencing input parameter and a speed-load resolved reference value for the at least one emission influencing input parameter; multiplying the calculated deviation with an individual value from an individual speed-load resolved weight map for the at least one emission influencing input parameter, thereby creating an emission influencing input parameter related correction for the at least one emission influencing input parameter; adding and summarizing the at least one emission influencing input parameter related correction to the base $NO_x$ value and thereby obtaining an estimated $NO_x$ mass flow value. Thus, the present invention provides an engine speed-load resolved reference $NO_x$ map for the $NO_x$ emissions with additive correction terms for signals that deviate from their nominal values. The influences on the different deviations are dependent on the speed/load working point for the diesel engine.

By using the $NO_x$ emission estimation method according to the invention, calibration efforts during diesel engine and vehicle development can be moved upstream from vehicle towards engine rig. The $NO_x$ emission estimation method according to the invention can compensate for changes in base calibrations, i.e. when optimizing properties such as emissions, power and sound by changing parameters that have influence on the $NO_x$ formation during combustion. The

NO$_x$ emission estimation method according to the invention is independent of driving pattern, such that NO$_x$ emission calibration workload can be moved to earlier stages in the development of diesel engines. By using the NO$_x$ emission estimation method according to the invention, calibration workload can be reduced.

According to a further advantageous aspect of the invention, the method comprises the step of: using the estimated NO$_x$ mass flow value for the diesel engine as an input for optimizing a control strategy of an after treatment system, i.e. optimizing the control strategy for a software governing after treatment system. This has impact on oil dilution risk and risk and fuel consumption. Thus, the present invention can provide a reduction of the risk for oil dilution and can reduce the fuel consumption. By providing an accurate estimation of the NO$_x$ out of the diesel engine the control strategy can be optimized such that after treatment systems can work in an optimal way and achieve high conversion efficiency.

According to a further advantageous aspect of the invention, the method comprises the step of: delaying the signal value for at least one emission influencing input parameter, such that the at least one emission influencing input parameter is individually delayed to be time synchronized with a detection of an exhaust lambda sensor, thereby compensating for the delay in measuring the properties for each singular combustion in the combustion chamber.

According to a further advantageous aspect of the invention, the estimated NO$_x$ mass flow is obtained by: summarizing the base NO$_x$ value and the at least one emission influencing input parameter and creating a mathematical polynomial wherein the base NO$_x$ value and the at least one emission influencing input parameter are logarithmic variables providing the estimated NO$_x$ mass flow value.

According to a further advantageous aspect of the invention, the method is adapted to use combustion influencing properties, wherein exhaust lambda value, intake manifold oxygen mass ratio, intake manifold gas temperature, fuel rail pressure, main injection timing, combustion operation mode, intake manifold pressure, piston cooling and post injection amount and timing are the emission influencing input parameters.

The object is further achieved by a NO$_x$ emission estimation arrangement for a diesel engine for estimating the amount of NO$_x$ generated in a combustion chamber of the diesel engine, wherein said arrangement comprising: a memory; and a control unit, characterized in that said memory is encoded with instructions that, when executed, cause the control unit to receive input values for speed, load and for at least one emission influencing input parameter wherein the arrangement is capable of: providing a base NO$_x$ value from an engine speed-load resolved reference NO$_x$ map; calculating a deviation between at least one emission influencing input parameter and a speed-load resolved reference value for the at least one emission influencing input parameter; multiplying the calculated deviation with an individual value from an individual speed-load resolved weight map for the at least one emission influencing input parameter, thereby creating an emission influencing input parameter related correction for the at least one emission influencing input parameter; adding and summarizing the at least one emission influencing input parameter related correction to the base NO$_x$ value and thereby obtaining an estimated NO$_x$ mass flow. No additional parts or space are required in the inventive NO$_x$ estimation arrangement in order to estimate the amount of NO$_x$ generated in a combustion chamber of the diesel engine.

By using the NO$_x$ emission estimation arrangement according to the invention, calibration efforts during diesel engine and vehicle development can be moved upstream from vehicle towards engine rig. The NO$_x$ emission estimation arrangement according to the invention can compensate for changes in base calibrations and is independent of driving pattern, such that NO$_x$ emission calibration workload can be moved to earlier stages in the development of diesel engines. By using the NOx emission estimation arrangement according to the invention, calibration workload can be reduced.

According to a further advantageous aspect of the invention, the arrangement is capable of: using the estimated NO$_x$ mass flow value for the diesel engine as an input for optimizing the control strategy of the after treatment systems.

According to a further advantageous aspect of the invention, the arrangement is capable of: delaying the signal value for at least one emission influencing input parameter, such that the at least one emission influencing input parameter is individually delayed to be time synchronized with a detection of an exhaust lambda sensor, thereby compensating for the delay in measuring the properties for each singular combustion in the combustion chamber.

According to a further advantageous aspect of the invention, the estimated NO$_x$ mass flow is obtained by: summarizing the base NO$_x$ value and the at least one emission influencing input parameter and creating a mathematical polynomial wherein the base NO$_x$ value and the at least one emission influencing input parameter are logarithmic variables providing the estimated NO$_x$ mass flow value.

According to a further advantageous aspect of the invention, the arrangement is adapted to use combustion influencing properties, wherein exhaust lambda value, intake manifold oxygen mass ratio, intake manifold gas temperature, fuel rail pressure, main injection timing, combustion operation mode, intake manifold pressure, piston cooling and post injection amount and timing are the emission influencing input parameters.

According to a further advantageous aspect of the invention, a computer-readable medium have computer executable instructions for performing the method according to the invention.

According to a further advantageous aspect of the invention, a vehicle comprises an arrangement according to the invention.

Any of the advantageous features of the present invention above may be combined in any suitable way.

A number of advantages are provided by means of the present invention, for example:

- an improved workflow during development, enabling earlier calibration, of diesel engines is obtained;

- an improved, accurate and more robust estimation and prediction for the $NO_x$ mass flow for the diesel engine is obtained;

- a solution which enables a $NO_x$ emission estimation variant matrix to be reduced to one variant per engine hardware specification is obtained;

- a solution being able to compensate for engine calibration changes and deviations in engine running parameters, thereby enabling calibration earlier in the development of a diesel engine is obtained;

- a more cost efficient and robust diesel engine development is obtained.

BRIEF DESCRIPTION OF THE DRAWINGS

The present invention will now be described in detail with reference to the figures, wherein:

Fig. 1 schematically shows a pictorial representation of a flow chart for the process of estimating the amount of $NO_x$ according to the present invention.

Fig. 2 schematically shows a pictorial representation of an overall flow chart of a $NO_x$ out of engine estimation model for the method and process of estimating the amount of $NO_x$ according to the present invention.

Fig. 3 schematically shows a pictorial representation of a vehicle having a $NO_x$ emission estimation arrangement according to the present invention.

It should be added that the following description of the examples is for illustration purposes only and should not be interpreted as limiting the invention exclusively to these examples/aspects.

DETAILED DESCRIPTION

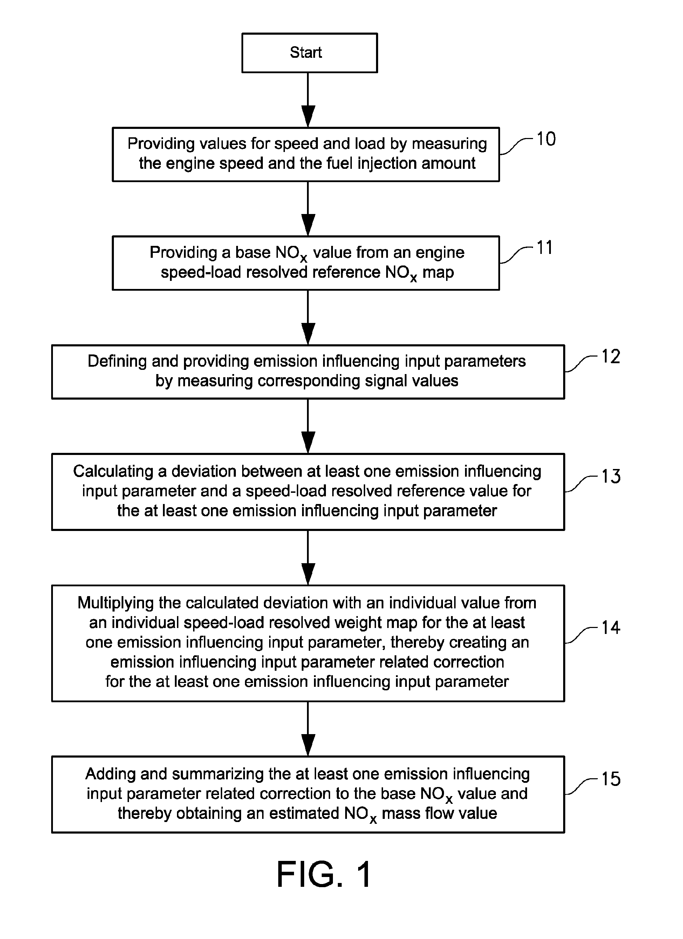

All the figures 1 to 3 are schematically illustrated.

The present invention is a solution for estimating and predicting $NO_x$ emission out of a diesel engine. The solution has a physical approach for estimating the accurate $NO_x$ formation dependencies of combustion influencing properties, using factors both before-in-and after the combustion chamber. The inventive solution can be implemented as a Software Plugin Module (SPM) to be used in a control unit in a vehicle or which may be integrated in a specific unit in a vehicle. The present invention estimates $NO_x$ emission out of a diesel engine using physical signals characterizing a combustion event.

The following examples of the present invention relate, in general, to the field of after treatment systems for $NO_x$ generated of diesel engines, in particularly, to a solution for estimating and predicting the amount of $NO_x$ emission generated out of the diesel engine, whereby the generated $NO_x$ can be taken care of using an after treatment system.

Examples of the present invention will be described more fully hereinafter with reference to the accompanying drawings, in which examples of the invention are shown. This invention may, however, be embodied in many different forms and should not be construed as limited to the examples set forth herein. Rather, these examples are provided so that this disclosure will be thorough and complete, and will fully convey the scope of the invention to those skilled in the art. Like reference signs refer to like elements throughout.

Figure 1 shows a flow chart for the process of estimating the amount of $NO_x$ according to the present invention. Hereinafter, referring to figure 1, the method of the present invention is explained in detail.

First, values for speed and load are provided by measuring the engine speed and the fuel injection amount (10). Then, a base $NO_x$ value is provided from an engine speed-load resolved reference $NO_x$ map (11). Thereafter, emission influencing input parameters are defined and provided by measuring corresponding signal values (12). Then, a deviation between at least one emission influencing input parameter and a speed-load resolved reference value for the at least one emission influencing input parameter is calculated (13). Then, the calculated deviation is multiplied with an individual value from an individual speed-load resolved weight map for the at least one emission influencing input parameter, thereby creating an emission influencing input parameter related correction for the at least one emission influencing input parameter (14). All reference maps used in the present invention are speed-load resolved and have the same axis. Finally, the at least one emission influencing input parameter related correction is added and summarized to the base $NO_x$ value and thereby obtaining an estimated $NO_x$ mass flow value (15).

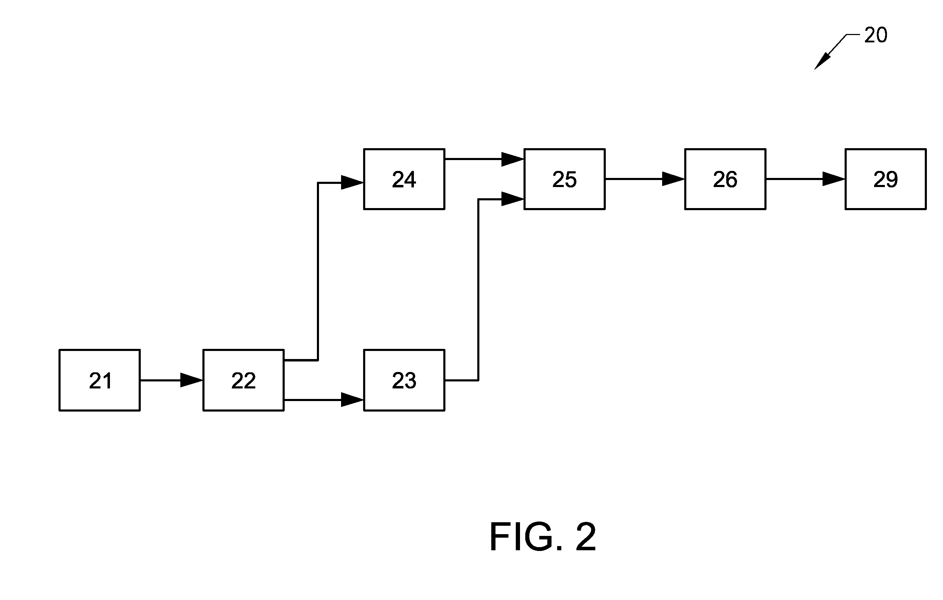

Figure 2 shows an overall flow chart of a $NO_x$ out of engine estimation model 20 for the method and process of estimating the amount of $NO_x$ according to the present invention. The present invention comprises an inventive structure for a data-driven estimation model 20 for $NO_x$ emissions which is further described below. The structure of the estimation model 20 is based on that for each engine speed/injected fuel working point of the diesel engine, emissions are described as linear and/or second order regression models for other parameters that affect the emissions, i.e. emission influencing input parameters. The estimation model 20 is based on an engine speed-load resolved reference $NO_x$ map, and uses deviations from the nominal values for different input signals to predict the diesel engine $NO_x$ out emissions. The estimation model 20 has the possibility to include compensations for all emission influencing input parameters as long as measurements are performed which include variations in that parameter.

The approach to use deviations from the nominal values for different inputs to model emissions leads to that it is possible to use measured steady-state engine data to calibrate the estimation model 20, but still achieve acceptable performance for transient engine behaviour.

The estimation model 20 is fast to execute and is capable of reacting to all different calibratable engine parameters, thus making it suitable for development of engine calibration methods. It is also suitable to be implemented as a virtual emission sensor for online emission estimation in an engine management system.

The estimation model 20 comprises of the following process steps: delaying calculation step 21, delaying step 22, calculation and multiplying step 23, base $NO_x$ value step 24, adding step 25, piston cooling correction step 26, and providing estimated $NO_x$ content step 29.

The number of periods, given a fixed data collecting frequency, to delay incoming signal values for the corresponding emission influencing input parameters, engine speed and load are calculated during the delaying calculation step 21.

The signal values for engine speed and fuel injection amount and the emission influencing input parameters are delayed during the delaying step 22. The signal values are delayed such that engine speed and fuel injection amount and the emission influencing input parameters are individually delayed to be time synchronized with a detection of an exhaust lambda sensor, thereby compensating for the delay in measuring the properties for each singular combustion in the combustion chamber. Values for engine speed and fuel injection amount and all the emission influencing input parameters are individually delayed, with varying time delay, such that the prerequisite for each combustion is captured. By using values for engine speed and the fuel injection amount a base $NO_x$ value is provided from an engine speed-load reference $NO_x$ map during the base $NO_x$ value step 24.

The estimation model 20 is a mathematical estimation model which is generated during the calculation and multiplying step 23 and the adding step 25 by using a mathematical polynomial wherein a constant and a number of terms for different $NO_x$ contributions are added to generate a $NO_x$ mass flow value. Thus, a mathematical separation of a multidimensional relationship between emission influencing input parameters and the $NO_x$ out of the engine is enabled. The constant is the base $NO_x$ value taken from an engine speed-load resolved reference $NO_x$ map. To this base $NO_x$ value positive and negative terms for $NO_x$ contributions are added for the different emission influencing input parameters when any of the emission influencing input parameters provides a deviation from a nominal value, i.e. the value at the $NO_x$ reference mapping. The parameters engine speed [rpm] and fuel injection amount [mg/comb] and the following emission influencing input parameters can be used in the estimation model:

- exhaust lambda value;

- intake manifold oxygen mass ratio;

- intake manifold gas temperature [C];

- fuel rail pressure [hPa];

- main injection timing [CABTDC];

- combustion operation mode (normal or regeneration);

- intake manifold pressure [hPa];

- piston cooling (on or off);

- post injection amount and timing.

The $NO_x$ contributions for the emission influencing input parameters, i.e. the emission influencing input parameter related corrections, comprises of a multiplication of the deviation (actual signal value - reference value) with an amplification factor K, which is taken from an engine speed-load resolved weight factor map. The weight factors (K-factors) indicate the strength of the influence of the deviation in an individual emission influencing input parameter on the $NO_x$ formation. All the reference maps are speed-load resolved having the same axis. The mathematical polynomial can be created by using at least one arbitrary emission influencing input parameter. When using all the emission influencing input parameters the mathematical polynomial and the estimated $NO_x$ mass flow [mg/s] are created by the following equation:

$$NO_x \ mass \ flow \ \left[\frac{mg}{s}\right]$$

$$= base \ NO_x \ value + K_{exhaust \ lambda}$$

$$\times delta_{exhaust \ lamda} + K_{intake \ manifold \ oxygen \ ration}$$

$$\times delta_{intake \ manifold \ oxygen \ ratio}$$

$$+ K_{intake \ manifold \ gas \ temperature}$$

$$\times delta_{intake \ manifold \ gas \ temperature} + K_{fuel \ rail \ pressure}$$

$$\times delta_{fuel \ rail \ pressure} + K_{intake \ main \ injection \ timing}$$

$$\times delta_{intake \ main \ injection \ timing}$$

$$+ K_{combustion \ operation \ mode}$$

$$\times delta_{combustion \ operation \ mode}$$

$$+ K_{intake \ manifold \ pressure} \times delta_{intake \ manifold \ pressure}$$

$$+ K_{piston \ cooling} \times delta_{piston \ cooling}$$

$$+ K_{post \ injection \ amount} \times delta_{post \ injection \ amount}$$

$$+ K_{post \ injection \ timing} \times delta_{post \ injection \ timing}$$

The base $NO_x$ value is provided from an engine speed-load resolved reference map. The individual value (K) is provided from an individual speed-load resolved weight reference map. The deviation from nominal value (delta) is provided from the deviation from the at least one emission influencing input parameter and a speed-load resolved reference value for that at least one emission influencing input parameter. In the mathematical polynomial all emission influencing input parameters are logarithmic and the summarized logarithmic $NO_x$ mass flow value is mathematically transformed by inverse logarithmic via a value curve to a physical $NO_x$ mass flow value [mg/s]. This is done before the piston cooling correction step 26.

Multi-switches can be used in the estimation model 20. Multi-switches are configurable two-term multipliers that effectively creates new input values which are then weighted with speed-load resolved weight maps and then added to the summarized logarithmic $NO_x$ mass flow value before the mathematical transformation. Multi-switches are able to calibrate with joint-variation effects between different emission influencing input parameters. By using multi-switches the estimation model 20 is flexible. By using the multi-switches it is possible to calibrate and create different combinations of the emission influencing input parameters to be used as new input values for the estimation model 20. For example, the main injection timing and the intake manifold oxygen mass ratio can be combined and multiplied to create a new input value. The multi-switches allow true covariations to be modeled.

The estimated physical $NO_x$ mass flow value from the adding step 25 is for an active piston cooling. If the piston cooling is not active a correction is done during the piston cooling correction step 26.

The estimated $NO_x$ mass flow value is taken from the piston cooling correction step 26, whereby the final estimated $NO_x$ mass flow value is provided during the estimated $NO_x$ content step 29. The obtained estimated $NO_x$ mass flow value is the $NO_x$ mass flow value from the engine.

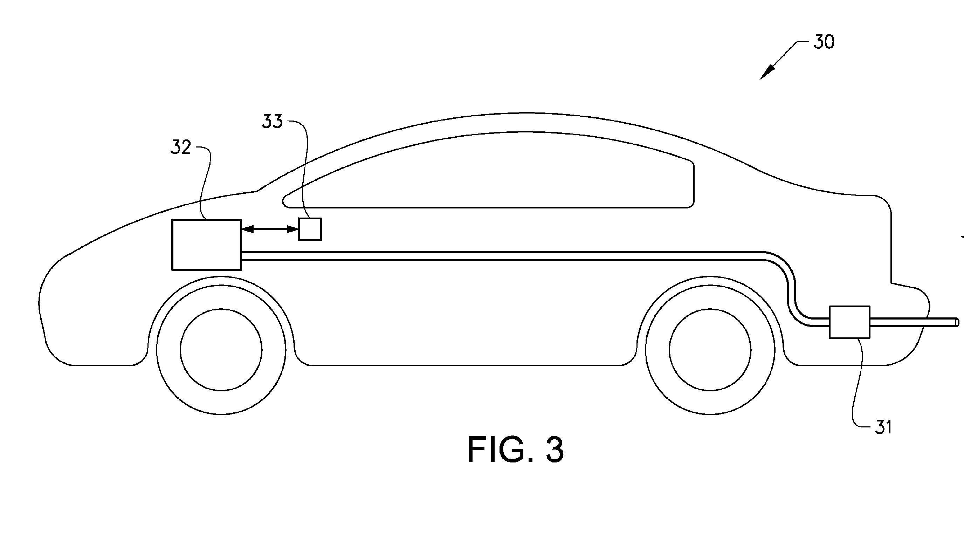

Fig. 3 schematically shows a pictorial representation of a vehicle 30 having a $NO_x$ emission estimation arrangement according to the present invention. The vehicle 30 comprises a diesel engine 32, a control unit 33 and a lean $NO_x$ trap 31. The diesel engine 32 and the control unit 33 are in communication with each other. The diesel engine 32 and the vehicle 30 is equipped with sensors (not shown) such that the engine speed, fuel injection amount and the emission influencing input parameters and their corresponding signal values can be measured and registered and communicated between the diesel engine 32 and the control unit 33.

The $NO_x$ emission estimation arrangement according to the invention may be used for any type of appropriate diesel engine in any type appropriate vehicle in the form of, for example, a car, a truck or a bus.

The invention is not limited to the example described above, but may be modified without departing from the scope of the claims below.

The terminology used herein is for the purpose of describing particular examples only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

The foregoing has described the principles, preferred examples and modes of operation of the present invention. However, the invention should be regarded as illustrative rather than restrictive, and not as being limited to the particular examples discussed above. The different features of the various examples of the invention can be combined in other combinations than those explicitly described. It should therefore be appreciated that variations may be made in those examples by those skilled in the art without departing from the scope of the present invention as defined by the following claims.

**Claims**

1. A $NO_x$ emission estimation method for a diesel engine for estimating the amount of $NO_x$ generated in a combustion chamber of the diesel engine (32), **characterized in that** the method comprises:

   - providing values for speed and load by measuring the engine speed and the fuel injection amount (10);
   - providing a base $NO_x$ value from an engine speed-load resolved reference $NO_x$ map (11);
   - defining and providing emission influencing input parameters by measuring corresponding signal values (12);
   - calculating a deviation between at least one emission influencing input parameter and a speed-load resolved reference value for the at least one emission influencing input parameter (13);
   - multiplying the calculated deviation with an individual value from an individual speed-load resolved weight map for the at least one emission influencing input parameter, thereby creating an emission influencing input parameter related correction for the at least one emission influencing input parameter (14);
   - adding and summarizing the at least one emission influencing input parameter related correction to the base $NO_x$ value and thereby obtaining an estimated $NO_x$ mass flow value (15).

2. The method according to claim 1, **characterized in that** the method comprises:

   - using the estimated $NO_x$ mass flow value for the diesel engine (32) as an input for optimizing a control strategy of an after treatment system (31).

3. The method according to any of the claim 1 or 2, **characterized in that** the method comprises:

- delaying the signal value for at least one emission influencing input parameter, such that the at least one emission influencing input parameter is individually delayed to be time synchronized with a detection of an exhaust lambda sensor, thereby compensating for the delay in measuring the properties for each singular combustion in the combustion chamber.

4. The method according to any of the preceding claims, **characterized in that** the estimated $NO_x$ mass flow is obtained by:

- summarizing the base $NO_x$ value and the at least one emission influencing input parameter correction and creating a mathematical polynomial wherein the base $NO_x$ value and the at least one emission influencing input parameter are logarithmic variables providing the estimated $NO_x$ mass flow value.

5. The method according to any of the preceding claims, **characterized in that** the method is adapted to use combustion influencing properties, wherein exhaust lambda value, intake manifold oxygen mass ratio, intake manifold gas temperature, fuel rail pressure, main injection timing, combustion operation mode, intake manifold pressure, piston cooling and post injection amount and timing are the emission influencing input parameters.

6. An $NO_x$ emission estimation arrangement for a diesel engine (32) for estimating the amount of $NO_x$ generated in a combustion chamber of the diesel engine (32), wherein said arrangement comprising:

a memory; and
a control unit (33),
**characterized in that** said memory is encoded with instructions that, when executed, cause the control unit (33) to receive input values for speed, load and for at least one emission influencing input parameter wherein the arrangement is capable of:

- providing a base $NO_x$ value from an engine speed-load resolved reference $NO_x$ map;
- calculating a deviation between at least one emission influencing input parameter and a speed-load resolved reference value for the at least one emission influencing input parameter;
- multiplying the calculated deviation with an individual value from an individual speed-load resolved weight map for the at least one emission influencing input parameter, thereby creating an emission influencing input parameter related correction for the at least one emission influencing input parameter;
- adding and summarizing the at least one emission influencing input parameter related correction to the base $NO_x$ value and thereby obtaining an estimated $NO_x$ mass flow.

7. The arrangement according to claim 6, **characterized in that** the arrangement is capable of:

- using the estimated $NO_x$ mass flow value for the diesel engine (32) as an input for optimizing a control strategy of an after treatment system (31).

8. The arrangement according to claims 6 or 7, **characterized in that** the arrangement is capable of:

- delaying the signal value for at least one emission influencing input parameter, such that the at least one emission influencing input parameter is individually delayed to be time synchronized with a detection of an exhaust lambda sensor, thereby compensating for the delay in measuring the properties for each singular combustion in the combustion chamber.

9. The arrangement according to any of the claims 6 - 8, **characterized in that** the estimated $NO_x$ mass flow is obtained by:

- summarizing the base $NO_x$ value and the at least one emission influencing input parameter and creating a mathematical polynomial wherein the base $NO_x$ value and the at least one emission influencing input parameter are logarithmic variables providing the estimated $NO_x$ mass flow value.

10. The arrangement according to any of the claims 6 - 9, **characterized in that** the arrangement is adapted to use combustion influencing properties, wherein exhaust lambda value, intake manifold oxygen mass ratio, intake manifold gas temperature, fuel rail pressure, main injection timing, combustion operation mode, intake manifold pressure, piston cooling and post injection amount and timing are the emission influencing input parameters.

11. A computer-readable medium having computer executable instructions for performing the method of any of the claims 1 - 5.

12. Vehicle (30) comprising an arrangement according to any of the claims 6 - 10.
    REFERENCE SIGNS

    10: Providing values for speed and load step
    11: Providing a base $NO_x$ value step
    12: Defining and providing emission influencing input parameters step
    13: Calculating a deviation step
    14: Multiplying the calculated deviation step
    15: Adding and summarizing step
    20: $NO_x$ out of engine estimation model
    21: Delaying calculation step
    22: Delaying step
    23: Calculation and multiplying step
    24: Base $NO_x$ value step
    25: Adding step
    26: Piston cooling correction step
    29: Providing estimated $NO_x$ content step
    30: Vehicle
    31: Lean $NO_x$ trap
    32: Diesel engine
    33: Control unit

```
                        ┌─────────────────┐
                        │      Start      │
                        └─────────────────┘
                                 │
                                 ▼
        ┌─────────────────────────────────────────────┐
        │ Providing values for speed and load by      │ ─── 10
        │ measuring the engine speed and the fuel     │
        │ injection amount                            │
        └─────────────────────────────────────────────┘
                                 │
                                 ▼
        ┌─────────────────────────────────────────────┐
        │ Providing a base $NO_x$ value from an engine │ ─── 11
        │ speed-load resolved reference $NO_x$ map     │
        └─────────────────────────────────────────────┘
                                 │
                                 ▼
    ┌─────────────────────────────────────────────────────┐
    │ Defining and providing emission influencing input    │ ─── 12
    │ parameters by measuring corresponding signal values  │
    └─────────────────────────────────────────────────────┘
                                 │
                                 ▼
    ┌─────────────────────────────────────────────────────┐
    │ Calculating a deviation between at least one emission │ ─── 13
    │ influencing input parameter and a speed-load resolved │
    │ reference value for the at least one emission         │
    │ influencing input parameter                           │
    └─────────────────────────────────────────────────────┘
                                 │
                                 ▼
    ┌─────────────────────────────────────────────────────┐
    │ Multiplying the calculated deviation with an          │ ─── 14
    │ individual value from an individual speed-load        │
    │ resolved weight map for the at least one emission     │
    │ influencing input parameter, thereby creating an      │
    │ emission influencing input parameter related          │
    │ correction for the at least one emission influencing  │
    │ input parameter                                       │
    └─────────────────────────────────────────────────────┘
                                 │
                                 ▼
    ┌─────────────────────────────────────────────────────┐
    │ Adding and summarizing the at least one emission      │ ─── 15
    │ influencing input parameter related correction to     │
    │ the base $NO_x$ value and thereby obtaining an        │
    │ estimated $NO_x$ mass flow value                      │
    └─────────────────────────────────────────────────────┘
```

# FIG. 1

FIG. 2

FIG. 3

Europäisches
Patentamt

European
Patent Office

Office européen
des brevets

**EUROPEAN SEARCH REPORT**

Application Number

EP 11 18 3562

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 381 872 A (DAIMLER CHRYSLER AG [DE]) 14 May 2003 (2003-05-14) | 1,2,4-7, 9-12 | INV. F02D41/14 |
| Y | * abstract * * page 3, line 22 - page 5, line 27; figures 1,10-13 * * page 8, line 3 - line 12 * * page 11, line 1 - page 12, line 26 * * page 14, line 12 - page 16, line 14 * * page 17, lines 17-27 * | 3,8 | ADD. F02D41/02 F02D35/02 |
| Y | US 2008/201054 A1 (GRICHNIK ANTHONY J [US] ET AL) 21 August 2008 (2008-08-21) | 3,8 | |
| A | * paragraphs [0021], [0023], [0030], [0031]; figure 5 * * paragraphs [0037] - [0039], [0043], [0044], [0053], [0054], [0090] * | 1,2,4-7, 9-12 | |
| X | DE 196 07 151 C1 (SIEMENS AG [DE]) 10 July 1997 (1997-07-10) * the whole document * | 1,2,4-7, 9-12 | |
| X | DE 198 51 319 A1 (SIEMENS AG [DE]) 11 May 2000 (2000-05-11) * column 1, lines 56-61 - column 2, lines 33-49; figures 1,2 * * column 4, line 58 - column 5, line 67 * | 1,2,4-7, 9-12 | TECHNICAL FIELDS SEARCHED (IPC)  F02D |

The present search report has been drawn up for all claims

| Place of search | Date of completion of the search | Examiner |
|---|---|---|
| The Hague | 20 March 2012 | Ossanna, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 18 3562

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2012

| Patent document cited in search report | | Publication date | Patent family member(s) | | Publication date |
|---|---|---|---|---|---|
| GB 2381872 | A | 14-05-2003 | DE | 10148663 A1 | 10-04-2003 |
| | | | FR | 2830276 A1 | 04-04-2003 |
| | | | GB | 2381872 A | 14-05-2003 |
| US 2008201054 | A1 | 21-08-2008 | NONE | | |
| DE 19607151 | C1 | 10-07-1997 | DE | 19607151 C1 | 10-07-1997 |
| | | | EP | 0822856 A1 | 11-02-1998 |
| | | | WO | 9731704 A1 | 04-09-1997 |
| DE 19851319 | A1 | 11-05-2000 | DE | 19851319 A1 | 11-05-2000 |
| | | | WO | 0028200 A1 | 18-05-2000 |

EPO FORM P0459

For more details about this annex : see Official Journal of the European Patent Office, No. 12/82